# EUROPÄISCHE PATENTSCHRIFT

(11) **EP 1 776 536 B1**
(45) Veröffentlichungstag und Bekanntmachung des Hinweises auf die Patenterteilung: **08.09.2010**
(21) Anmeldenummer: 05777779.9
(22) Anmeldetag: 28.07.2005
(51) Int. Cl.: F16H 57/04, F01M 11/02

(54) **GETRIEBEANORDNUNG**
TRANSMISSION ARRANGEMENT
DISPOSITIF DE TRANSMISSION

(30) Priorität: 03.08.2004 DE 102004037580
(43) Veröffentlichungstag der Anmeldung: 25.04.2007
(73) Patentinhaber: Deere & Company, Moline, IL 61265-8098 (US)
(72) Erfinder: MARTINEZ, Monica Gil, E-28904 Getafe, Madrid (ES); ORTEGA, Francisco Rueda, E-28905 Getafe, Madrid (ES)
(74) Vertreter: Holst, Sönke
(86) Internationale Anmeldenummer: PCT/EP2005/053701
(87) Internationale Veröffentlichungsnummer: WO 2006/013188

(56) Entgegenhaltungen:
- EP-A- 0 811 791
- EP-A- 1 233 200
- US-B1- 6 273 214
- PATENT ABSTRACTS OF JAPAN Bd. 009, Nr. 279 (M-427), 7. November 1985 (1985-11-07) -& JP 60 121364 A (AISHIN WARNER KK), 28. Juni 1985 (1985-06-28)

## Beschreibung

Die Erfindung betrifft eine Getriebeanordnung, mit einem Getriebegehäuse, einem von dem Getriebegehäuse umschlossenen Getrieberaum, einer in dem Getriebegehäuse gelagerten ersten Welle, einem in der ersten Welle mit seinem Querschnittsschwerpunkt exzentrisch zur Rotationsachse ausgebildeten Hohlraum, einem in der ersten Welle ausgebildeten Kanal, der den Getrieberaum mit dem Hohlraum der ersten Welle verbindet, wobei der Kanal mit einem einen Durchlassquerschnitt des Kanals reduzierenden Bauteil versehen ist, und einer in dem Hohlraum der ersten Welle drehbar gelagerten zweiten Welle.

Im Stand der Technik sind Getriebeanordnungen bekannt, die zueinander winklig angeordnete Getriebeübersetzungen mit ineinander angeordneten Getriebewellen aufweisen. Getriebeanordnungen mit ineinander angeordneten Getriebewellen stellen unter anderem eine kompakte Bauweise und eine Möglichkeit zur Realisierung von Exzentertrieben dar. Getriebeanordnungen mit Exzentertrieb werden beispielsweise in der Landwirtschaft zum Antrieb von Schneidwerken an Mähvorsätzen für Mähdrescher eingesetzt.

Eine derartige Getriebeanordnung wird beispielsweise in der US 6,273,214 B1 offenbart. Darin wird eine Getriebeanordnung offenbart mit einem Getriebegehäuse, einem von dem Getriebegehäuse umschlossenen Getrieberaum, einer in dem Getriebegehäuse gelagerten ersten Welle, einem in der ersten Welle mit seinem Querschnittsschwerpunkt exzentrisch zur Rotationsachse ausgebildeten Hohlraum, einem in der ersten Welle ausgebildeten Kanal, der den Getrieberaum mit dem Hohlraum der ersten Welle verbindet, und einer in dem Hohlraum der ersten Welle drehbar gelagerten zweiten Welle, wobei die zweite Welle einteilig ausgebildet ist und wenigstens einen ersten und einen zweiten Lagerbereich, einen Verzahnungsbereich, der mit einer mit dem Getriebegehäuse drehfest verbundenen Verzahnung in Eingriff steht, und einen axial aus dem Hohlraum der ersten Welle herausragenden Wellenendbereich aufweist, wobei einer der Lagerbereiche zwischen dem Verzahnungsbereich und dem Wellenendbereich angeordnet ist.

Problematisch dabei ist, dass eine Optimierung der Schmiermittelversorgung durch den Kanal nicht möglich ist.

Die der Erfindung zugrunde liegende Aufgabe wird darin gesehen, die Schmiermittelversorgung für die zweite Welle an die Laufleistung der Getriebeanordnung anpassend zu optimieren.

Diese Aufgabe wird erfindungsgemäss durch den Patenanspruch 1 gelöst. Vorteilhafte Ausgestaltungen und Weiterbildungen der Erfindung gehen aus den Unteransprüchen hervor.

Erfindungsgemäß wird eine Getriebeanordnung ausgebildet, mit einem Getriebegehäuse, einem von dem Getriebegehäuse umschlossenen Getrieberaum, einer in dem Getriebegehäuse gelagerten ersten Welle, einem in der ersten Welle mit seinem Querschnittsschwerpunkt exzentrisch zur Rotationsachse ausgebildeten Hohlraum, einem in der ersten Welle ausgebildeten Kanal, der den Getrieberaum mit dem Hohlraum der ersten Welle verbindet, wobei der Kanal mit einem einen Durchlassquerschnitt des Kanals reduzierenden Bauteil versehen ist, und einer in dem Hohlraum der ersten Welle drehbar gelagerten zweiten Welle, wobei die zweite Welle einteilig ausgebildet ist und wenigstens einen ersten und einen zweiten Lagerbereich, einen Verzahnungsbereich, der mit einer mit dem Getriebegehäuse drehfest verbundenen Verzahnung in Eingriff steht, und einen axial aus dem Hohlraum der ersten Welle herausragenden Wellenendbereich aufweist, wobei einer der Lagerbereiche zwischen dem Verzahnungsbereich und dem Wellenendbereich angeordnet ist und die maximalen Außendurchmesser der zweiten Welle in den einzelnen Bereichen zum Wellenendbereich hin gleichbleibend oder ansteigend ausgebildet sind.

Die zweite Welle weist wenigstens einen ersten und einen zweiten Lagerbereich, einen Verzahnungsbereich und einen axial aus dem Hohlraum der ersten Welle herausragenden Wellenendbereich auf. Dadurch, dass die zweite Welle einteilig und insbesondere der Wellenendbereich als Teil der Welle ausgebildet ist, werden Verbindungsteile eingespart, die Schadensanfälligkeit reduziert und der Fertigungsprozess und die Montage vereinfacht. Vorzugsweise ist der zweite Lagerbereich zwischen dem Verzahnungsbereich und dem Wellenendbereich angeordnet. Die Lagerung der zweiten Welle kann an zwei im Hohlraum der ersten Welle axial beabstandeten Lagersitzen erfolgen. Vorzugsweise ist der erste Lagerbereich der zweiten Welle mit einem Wälzlager, insbesondere Nadellager, bestückt, wobei der erste Lagersitz vorzugsweise im Bereich der Hohlraumöffnung des Kanals im Getriebeinneren der ersten Welle angeordnet ist. Durch die relativ geringen Abmessungen eines Nadellagers kann eine kompakte Bauweise erzielt werden. Der zweite Lagersitz für ein zweites Wälzlager ist vorzugsweise an einer außen an der ersten Welle gelegenen Hohlraumöffnung angeordnet. Das zweite Wälzlager ist beispielsweise als Kugellager ausgebildet und nimmt den zweiten Lagerbereich der zweiten Welle auf. Selbstverständlich sind auch andere Kombinationen mit anderen Arten von Wälzlagern denkbar. Des Weiteren ist es denkbar, die Lagerbereiche auch direkt nebeneinander anzuordnen, so dass sowohl der Wellenendbereich als auch der Verzahnungsbereich frei gelagert sind. Vorzugsweise ist die zweite Welle derart ausgebildet, dass die maximalen Außendurchmesser der zweiten Welle in den einzelnen Bereichen zum Wellenendbereich hin ansteigen. Dadurch wird ein Wellenendbereich mit einem relativ großen Durchmesser erzielt, wobei ein Wellenabsatz zum Wellenendbereich als axiale Sicherung für das zweite Wälzlager dient. Des Weiteren wird dadurch eine einfache Vormontage des zweiten Wälzlagers auf der Welle ermöglicht, so dass das Einsetzen der zweiten Welle in einem Arbeitsschritt erfolgen kann und insbesondere die Montagezeiten bzw. die Wartungszeiten für die Getriebeanordnung verkürzt werden. Der zwischen dem wenigstens einen Lagerbereich und dem Wellenendbereich ausgebildete Verzahnungsbereich steht mit einer mit dem Getriebegehäuse drehfest verbundenen Verzahnung, vorzugsweise einem Hohlrad, im Eingriff. Dazu ist der Hohlraum der ersten Welle mit einer radial ausgerichteten Öffnung versehen, die sich über einen Teil des Umfangs der ersten Welle erstreckt und den Verzahnungsbereich teilweise freilegt. Durch den Eingriff des Verzahnungsbereichs mit der drehfest mit dem Getriebegehäuse verbundenen Verzahnung kann eine Eigenrotation der zweiten Welle im Hohlraum der ersten Welle erzeugt werden, so dass eine Überlagerung einer exzentrischen Bewegung der zweiten Welle um die Rotationsachse der ersten Welle mit einer Rotationsbewegung der zweiten Welle um die eigene Rotationsachse erzielbar ist.

Der Wellenendbereich der zweiten Welle weist Verbindungsmittel auf, über welche die zweite Welle mit einem Zapfen, bestückbar ist. Vorzugsweise ist an der frei liegenden Stirnfläche des Wellenendbereichs eine Flanschverbindung vorgesehen, die sich radial erstreckende Gewindebohrungen aufweist und mit einer an dem Zapfen komplementär ausgebildeten Flanschverbindung verbindbar ist. Die sich radial erstreckenden Bohrungen ermöglichen ein Verbinden bzw. Montieren des Zapfens aus radialer Richtung. Es ist aber auch denkbar, das am Wellenendbereich ein mit axial ausgerichteten Gewindebohrungen versehener Flansch angeordnet ist, der mit einem entsprechenden Gegenflansch des Zapfens verbindbar ist. Als Verbindungsmittel ist auch eine Zapfenaufnahme, beispielsweise eine Lagerbuchse oder Manschette denkbar, die entsprechend in den Wellenendbereich eingearbeitet ist und den Zapfen einer anzutreibenden Vorrichtung aufnimmt.

Zwischen der zweiten Welle und dem zweiten Lagersitz ist ein Spalt ausgebildet. Der Wellenendbereich der zweiten Welle weist eine Kappe auf, durch die der Spalt abdeckbar ist. Die Kappe kann als Topf ausgebildet sein, der über den Wellenendbereich gestülpt und auf diesem fixiert wird, wobei der Topfrand einen sich radial erstreckenden Kranz aufweist, der so bemessen ist, dass der Spalt durch den Kranz über dem gesamten Umfang abgedeckt wird. Durch die Abdeckung des Spalts wird vermieden, das Schmutzpartikel in das Innere des Hohlraums der zweiten Welle gelangen. Vorzugsweise weist die Kappe eine Öffnung auf, durch die die Verbindungsmittel zur Verbindung des Wellenendbereichs mit dem weiteren Bauteil zugänglich sind. Hierbei ist es auch denkbar, die Kappe durch eine Ringscheibe zu ersetzen, die den Spalt abdeckt und auf der ersten Welle befestigt ist.

Die Getriebeanordnung weist vorzugsweise einen Zapfen auf, der sich axial und exzentrisch zur Rotationsachse der zweiten Welle aus dem Wellenendbereich erstreckt. Durch Rotation der ersten und zweiten Welle erfolgt eine Überlagerung von einer exzentrischen Rotationsbewegung der Rotationsachse der zweiten Welle um die Rotationsachse der ersten Welle und von einer zusätzlichen exzentrischen Rotationsbewegung des Zapfens um die Rotationsachse der zweiten Welle. Der Zapfen dient dabei zur Übertragung der überlagerten Exzenterbewegungen in entsprechende lineare Bewegungen auf eine anzutreibende Vorrichtung, beispielsweise einem Schneidwerk. Der Zapfen weist vorzugsweise Verbindungsmittel auf, die mit den Verbindungsmitteln des Wellenendbereichs verbindbar sind. Dementsprechend ist der Zapfen mit einer in komplementärer Weise zu der Flanschverbindung des Wellenendbereichs ausgebildeten Flanschverbindung versehen, so dass die Flanschverbindung des Wellenendbereichs und die des Zapfens einander angepasst sind. Zur Übertragung der Rotationsbewegungen ist der Zapfen vorzugsweise mit einem Wälzlager versehen, welches von einer mit einer anzutreibenden Vorrichtung verbundenen Lagerpfanne verbindbar ist. Je nach Rotationsdrehzahl des Zapfens bzw. der Wellen und der zu übertragenden Kräfte kann jedoch auch anstelle des Wälzlagers ein Gleitlager, beispielsweise in Form einer Gleitbuchse, vorgesehen sein.

Das Wälzlager des Zapfens ist vorzugsweise als Rollenlager ausgebildet, wobei ein äußerer Laufring des Rollenlagers von einer Buchse, die vorzugsweise ringförmig ausgebildet ist und eine sphärisch gewölbt ausgebildeten Außenfläche aufweist, aufgenommen wird. Die sphärisch gewölbt ausgebildete Außenfläche wird wiederum von einer Lagerpfanne aufgenommen, welche mit einer kongruent zur Außenfläche der Buchse ausgebildeten Innenfläche ausgebildet ist. Die sphärisch ausgebildeten Flächen erlauben eine Relativbewegung zueinander, so dass sich zwischen Zapfen und anzutreibender Vorrichtung bzw. zwischen der Zapfenlängsachse und der Rotationssymmetrieachse der Lagerpfanne ein Neigungswinkel einstellen kann, wodurch Toleranzprobleme bei der Übertragung von Bewegungen überwunden werden können. Ferner ist es auch möglich, das Wälzlager als Kugellager auszubilden, dessen äußerer Laufring von einer entsprechenden Buchse aufgenommen wird. Die Buchse, die den äußeren Laufring aufnimmt, sowie die Lagerpfanne, die die Buchse umgibt, sind über den Umfang geschlossen ausgebildet. An der Lagerpfanne sind Aussparungen oder Öffnungen vorgesehen, die in radialer Richtung gegenüberliegen und sich axial zur Rotationssymmetrieachse der Lagerpfanne entlang der Innenfläche der Lagerpfanne erstrecken. Die Öffnungen sind derart bemessen, dass zum Aufnehmen der Buchse in die Lagerpfanne, die Buchse quer zu ihrer Rotationssymmetrieachse in ihrer Breite einführbar ist und durch Verschwenken um 90° die Außenfläche der Buchse zur Innenfläche der Lagerpfanne ausgerichtet und in Lagerstellung gebracht werden kann. Bisherige Ausführungen weisen eine auf dem Umfang geöffnete bzw. geschlitzte Buchse vor, meist aus Kunststoff, die von einer geöffnet ausgebildeten Lagerpfanne aufgenommen wird. Durch eine Spanneinrichtung an der Lagerpfanne wird die geschlitzte Buchse um das Wälzlager des Zapfens gespannt. Dadurch, dass die Buchse und die Lagerpfanne über den Umfang geschlossen ausgebildet sind, kann zum einen die Verbindung zwischen Wälzlager und Buchse bzw. Lagerpfanne ohne aufwändige Spannvorrichtung erfolgen, zum anderen können starre und verschleißfestere Materialien verwendet und damit die Wartungsintervalle verlängert bzw. die Schadensanfälligkeit reduziert werden. Ferner ergibt sich dadurch ein geringeres Lagerspiel. Eine Getriebeanordnung mit einem Wälzlager für den Zapfen unter Verwendung einer Buchse und einer Lagerpfanne, die in der vorangehend beschriebenen Art geschlossen ausgebildet sind und sphärische Flächen aufweisen, kann als eigenständige Erfindung angesehen werden.

In einer alternativen Ausführungsform ist das Wälzlager für den Zapfen als Nadellager ausgebildet. Dabei wird vorzugsweise ein Nadellager verwendet, welches einen äußeren Laufring mit einer sphärisch gewölbt ausgebildeten Außenfläche umfasst. Hierbei kann auch ein andersartiges Wälzlager verwendet werden, beispielsweise ein Kugel- oder Rollenlager, das mit einem derartig geformten äußeren Laufring versehen ist. In der alternativen Ausführungsform weist das Wälzlager für den Zapfen, bzw. das Nadellager, vorzugsweise einen Außenring auf, welcher mit einer kongruent zur Außenfläche des äußeren Laufrings ausgebildeten sphärisch gewölbten Innenfläche versehen ist, wobei der Laufring von dem Außenring aufgenommen wird und der Außenring des Nadellagers in einer Lagerpfanne gelagert ist. Der Außenring weist hierbei vorzugsweise eine zylindrische Außenfläche auf, die von einer Lagerpfanne aufgenommen wird, deren Innenfläche ebenfalls zylindrisch ausgebildet ist. Eine Lagerpfanne mit zylindrischer Innenfläche ist mit geringerem Fertigungsaufwand herstellbar als eine Lagerpfanne mit einer sphärisch gewölbten Innenfläche, jedoch ist bei einem Außenring mit zylindrischer Außenfläche und einer Lagerpfanne mit zylindrischer Innenfläche vorzugsweise eine Einspannvorrichtung vorgesehen, die den Außenring in der Lagerpfanne hält.

Die Lagerpfanne für das Wälzlager des Zapfens ist vorzugsweise mit Verbindungsmitteln, insbesondere Verbindungsmittel zur Verbindung mit einem Schneidwerk, verbunden. Beispielsweise ist die Lagerpfanne direkt mit einer Führungsstange oder einer Antriebsstange verbunden, durch die eine Schneidbewegung hervorgerufen wird. Die Verbindung zur Lagerpfanne kann beispielsweise durch Verschweißen oder Verschrauben erfolgen. Ferner ist es auch möglich, die Lagerpfanne in einem Stück mit dem Verbindungsmittel auszubilden, beispielsweise zu schmieden oder zu gießen.

Als den Durchlassquerschnitt des Kanals reduzierender Bauteil kann beispielsweise eine Düse oder Blende eingesetzt werden, welche eine Querschnittsöffnung aufweist, die geringer als der Durchlassquerschnitt des Kanals ist. Dabei kann der Bauteil an einer Öffnung oder auch innerhalb des Kanals angeordnet werden. Denkbar ist es auch, den Bauteil verstellbar im Kanal zu positionieren, beispielsweise durch ein Gewinde, welches sich durch den gesamten Kanal erstreckt. Der Kanal dient zur Versorgung des Hohlraums der ersten Welle mit Schmiermittel, welches in dem Getrieberaum deponiert ist. Dazu weist der Kanal eine konzentrisch zur Rotationsachse der ersten Welle angeordnete Getrieberaumöffnung und eine exzentrisch zur Rotationsachse der ersten Welle angeordnete Hohlraumöffnung auf. Durch die exzentrisch angeordnete Hohlraumöffnung entsteht bei Rotation der ersten Welle aufgrund wirkender Zentrifugalkräfte ein Sog in Richtung der Hohlraumöffnung, so dass sich an der Getrieberaumöffnung oder in dem Kanal befindliches Schmiermittel zur exzentrisch gelegenen Hohlraumöffnung befördert wird. Vorzugsweise ist der Bauteil zur Reduzierung des Durchlassquerschnitts des Kanals an der Getrieberaumöffnung angeordnet. Die Querschnittsöffnung des Bauteils ist derart bemessen, dass nur eine vorgebbare Menge an Schmiermittel, welches in dem Getrieberaum deponiert ist, in den Kanal und somit in den Hohlraum gelangt. Je nach Anordnung des Bauteils kann eine Druck- bzw. Sogwirkung, mit der das Schiermittel durch die Querschnittsöffnung des Bauteils gedrückt bzw. gesaugt wird, beeinflusst werden. Vorzugsweise ist die Getrieberaumöffnung mit einem Gewinde versehen, wobei der Bauteil in Form eines mit einem Außengewinde und einer Bohrung versehenen Verschlussstopfens, beispielsweise eine Schraube, ausgebildet ist. Die Bohrung stellt dabei die querschnittsreduzierende Öffnung dar, mit der eine vorgebbare Menge an Schmiermittel dosierbar ist. Beispielsweise kann eine handelsübliche Innensechskantschraube verwendet werden, die mit einer sich entlang der Schraubenlängsachse erstreckenden Bohrung versehen ist. Durch das Gewinde an der Getrieberaumöffnung des Kanals ist eine leicht zugängliche und einfache Montage des Verschlussstopfens gewährleistet. Die Größe bzw. der Durchmesser der in dem Verschlussstopfen vorgesehenen Bohrung ist dabei an die Laufleistung der Getriebeanordnung angepasst, so dass die Schmiermittelversorgung für die Getriebeanordnung auf das erforderliche Maß hin optimierbar ist. Sowohl eine Überversorgung als auch eine Unterversorgung mit Schmiermittel kann vermieden werden, so dass Wartungsintervalle verlängert bzw. die Laufdauer der Getriebeanordnung erhöht wird. Anstelle einer Innensechskantschraube ist auch eine Außensechskantschraube oder eine Schraube anderer Art einsetzbar. Der als Verschlussstopfen ausgebildete Bauteil kann auch als Hülse, Buchse, Röhrchen oder dergleichen ausgebildet sein, wobei als Werkstoff neben Metallen auch Kunststoffe oder Keramiken einsetzbar sind.

Die Getriebeanordnung weist eine im Getriebegehäuse gelagerte dritte Welle auf, deren Rotationsachse mit einer auf der Rotationsachse der ersten Welle liegenden Ebene einen Winkel einschließt. Vorzugsweise ist die dritte Welle derart angeordnet, dass die Rotationsachsen der ersten und dritten Welle einen Schnittpunkt aufweisen und somit auf einer gemeinsamen Ebene liegen und einen Winkel von etwa 90° einschließen. Es ist aber auch möglich, die dritte Welle versetzt anzuordnen, so dass die Rotationsachsen der ersten und dritten Welle nicht auf einer gemeinsamen Ebene liegen. Ferner ist es möglich die Wellen auch in einem größeren oder in einem kleineren Winkel zueinander anzuordnen.

Die dritte Welle ist vorzugsweise mit einem ersten Lager axial lose gelagert, wobei das erste Lager der dritten Welle als Rollenlager, insbesondere Nadellager, ausgebildet ist. Hierbei ist es auch möglich, andere Arten von Wälzlager einzusetzen, beispielsweise ein Kugellager, das auf der Welle oder in einem Lagersitz in beide Richtungen axial fixiert und die Welle axial lose gelagert ist. Die Verwendung eines Nadellagers als Loslager hat den Vorteil, dass die Welle sehr kompakt und einfach gestaltet werden kann. Die dritte Welle ist vorzugsweise mit einem zweiten Lager in beide Richtungen axial am Getriebegehäuse fixiert. Vorzugsweise ist das zweite Lager der dritten Welle als Wälzlager, insbesondere Kugellager, ausgebildet, welches durch einen Absatz am Getriebegehäuse nach innen zum Getriebegehäuse und mit einem Sprengring am Getriebegehäuse nach außen zum Getriebegehäuse axial fixiert ist. Durch die Fixierung in Außenrichtung des Getriebegehäuses mittels eines Sprengrings ist es möglich, die dritte Welle entsprechend vorzumontieren und in einem Arbeitsschritt in das Getriebegehäuse einzusetzen. Dadurch können Montage- und Wartungszeiten reduziert werden.

Die Getriebeanordnung weist ein auf der dritten Welle angeordnetes Zahnrad auf, welches mit einem Sprengring auf der Welle nur in einer Richtung axial fixiert ist. Durch die Anordnung eines Sprengrings zur Befestigung des Zahnrads kann ein aufwendig anzufertigender Absatz auf der Welle vermieden werden, wodurch die gesamte Welle einfacher gestaltbar ist und damit auch die Fertigungskosten reduziert werden können. Ein auf der ersten Welle befestigtes Zahnrad steht mit dem auf der dritten Welle befestigten Zahnrad in Eingriff, wobei das Zahnrad der ersten Welle in einem ersten Lager der ersten Welle radial zur Rotationsachse der ersten Welle fixiert ist und eine Axialkraft in Bezug auf die dritte Welle ausübt. Durch die Axialkraft und den am Getriebegehäuse angeordneten Sprengring für das zweite Lager der dritten Welle, ist die dritte Welle axial in beide Richtungen fixiert. Eine dritte Welle, die in der vorangehend beschriebenen Art ausgebildet ist, kann als eigenständige Erfindung angesehen werden.

Durch eine an dem Getriebegehäuse, beispielsweise an einem Getriebegehäusedeckel, vorgesehene Entlüftungseinrichtung, beispielsweise eine Entlüftungsöffnung, ein Entlüftungsröhrchen, ein Entlüftungs- oder Überdruckventil oder dergleichen, wird der Getrieberaum mit der Umgebung des Getriebegehäuses verbunden. Durch die Verbindung mit der Umgebung kann ein Druckausgleich zwischen Getrieberaum und Umgebung stattfinden, so dass auch Betriebstemperaturen reduziert und die Laufdauer erhöht werden. Die Entlüftungseinrichtung kann als ein sich durch eine Bohrung im Getriebegehäuse bzw. Getriebegehäusedeckel erstreckende Rohrkonstruktion ausgebildet sein, wobei die Entlüftungseinrichtung beispielsweise einen Kopf und einen in den Getrieberaum hineinragenden Rohrabschnitt aufweist. Der Kopf ist beispielsweise als eine mit einem Außensechskant versehene Schraube ausgebildet, welche einen Hohlraum aufweist. In dem Hohlraum des Kopfes ist ein Filterelement zur Filterung der in den Getrieberaum eintretenden Luft vorgesehen. Am Ende des Kopfes schließt sich der in den Getrieberaum hineinragende Rohrabschnitt an. Der Außensechskant wird vorzugsweise mit einer kreisrunden Kappe teilweise abgedeckt. Durch die entstehenden Hohlräume zwischen den Kantenflächen des Außensechskants und der Kappe kann Luft ein- bzw. Dampf austreten. Die Luft kann so durch das Filterelement gereinigt in das Innere der Getriebeanordnung gelangen. Gleichzeitig kann aus dem Getrieberaum Schmiermitteldampf an die Umgebung gefiltert abgegeben werden. Durch die Kappe wird das Filterelement leicht zugänglich geschützt und kann auf einfache Weise zu Wartungszwecken ausgetauscht werden. Die Kappe deckt den Außensechskant dabei nur soweit ab, dass ein ausreichender Bereich zum Ansetzen eines Werkzeugschlüssels unverdeckt bleibt. Dadurch wird eine einfache Montage/Demontage der Entlüftungseinrichtung gewährleistet, so dass die Bohrung, in der die Entlüftungseinrichtung aufgenommen ist beispielsweise auch zu Wartungszwecken als Schmiermittelnachfüllöffnung genutzt werden kann. Als Filterelement können beispielsweise feinmaschige Drahtgeflechte eingesetzt werden. Aber auch Filterelemente aus Kunststoffen, Zellulose oder Papier können verwendet werden. Der Rohrabschnitt kann als einfaches zylindrisches Röhrchen ausgebildet sein, welches mit dem Kopf verbunden, beispielsweise verlötet, verschweißt oder verschraubt ist.

Der Rohrabschnitt weist eine Länge auf, die ein Vielfaches, z. B. ein Fünffaches oder mehr, des Durchmessers des Kopfes beträgt, so dass der Rohrabschnitt möglichst tief in das Getriebegehäuse hineinragt und der Weg durch den Rohrabschnitt zum Filterelement möglichst groß ist, damit möglichst wenig Schmiermittel bzw. Schmiermitteldampf aus dem Getrieberaum an das Filterelement gelangt. Vorzugsweise ist dabei die Länge des Rohrabschnitts ebenfalls um ein Vielfaches größer bemessen als sein eigener Durchmesser. Der Rohrabschnitt ist in seiner Wandung mit einer Bohrung versehen. Vorzugsweise erstreckt sich die Bohrung radial zur Längsachse des Rohrabschnitts und ist in einem oberen Bereich zum Kopf, vorzugsweise im oberen Drittel des Rohrabschnitts, angeordnet. Die Bohrung dient dazu, dass sich im Inneren des Rohrabschnitts ansammelndes Schmiermittel austreten kann, bevor das Filterelement erreicht und dadurch verschmutzt wird. Dies würde zu kürzeren Wartungsintervallen führen. Hierbei ist es denkbar die Wandung auch mit mehreren Austrittsbohrungen oder anderen Öffnungen, beispielsweise Schlitzen, zu versehen.

Anhand der Zeichnung, die ein Ausführungsbeispiel der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine Querschnittsansicht einer erfindungsgemäßen Getriebeanordnung,
- Fig. 2: eine Seitenansicht der Getriebeanordnung aus Figur 1,
- Fig. 3: eine perspektivische Seitenansicht der Getriebeanordnung aus Figur 1,
- Fig. 4: eine Detailansicht einer zweiten Welle der Getriebeanordnung aus Figur 1,
- Fig. 5: eine Draufsicht eines Wellenendbereichs der zweiten Welle aus Figur 4,
- Fig. 6: eine Teilquerschnittsansicht einer Entlüftungseinrichtung der Getriebeanordnung aus Figur 1,
- Fig. 7: eine Seitenansicht einer Zapfenanordnung der Getriebeanordnung aus Figur 1,
- Fig. 8: eine Draufsicht der Zapfenanordnung aus Figur 7,
- Fig. 9: eine perspektivische Seitenansicht einer Kappe der Getriebeanordnung aus Figur 1,
- Fig. 10: eine Querschnittsansicht einer Lageranordnung für einen Zapfen der Getriebeanordnung aus Figur 1,
- Fig. 11: eine Querschnittsansicht einer Lagerpfanne mit Verbindungsmitteln für die Lageranordnung aus Figur 10 und
- Fig. 12: eine Querschnittsansicht einer Lageranordnung für einen Zapfen der Getriebeanordnung aus Figur 1 in einer alternativen Ausführungsform.

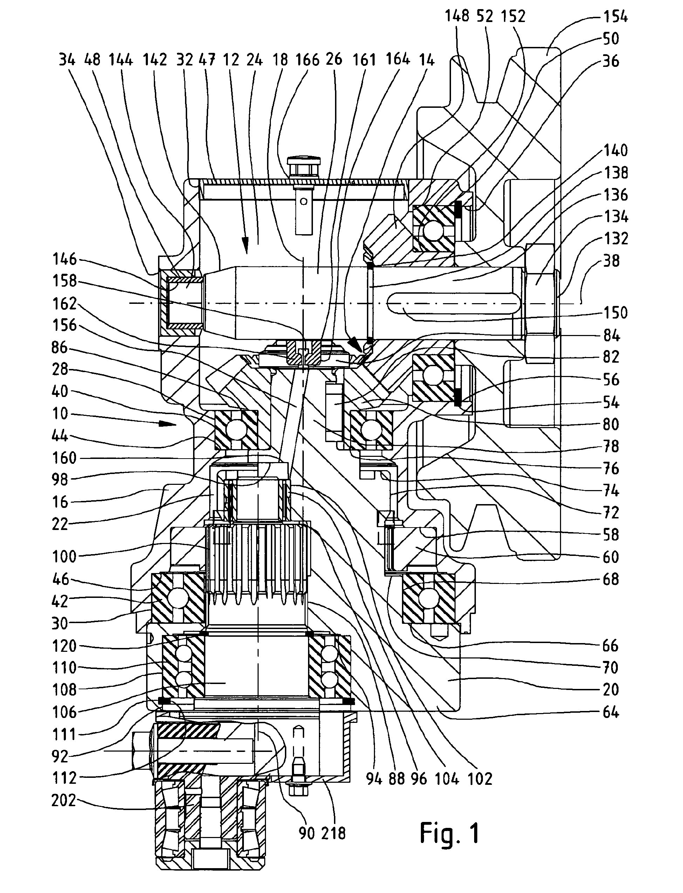

Die Figuren 1 bis 3 zeigen eine erfindungsgemäße Getriebeanordnung 10 mit einem einen Getrieberaum 12 eines Winkelgetriebes 14 umgebenden Getriebegehäuse 16. Das Getriebegehäuse 16 erstreckt sich im Wesentlichen rotationssymmetrisch entlang der Rotationsachse 18 einer ersten Welle 20, wobei die Rotationsachse 18 eine Längsrichtung der Getriebeanordnung 10 definiert. Der Getrieberaum 12 unterteilt sich in einen ersten Getrieberaumbereich 22, der im Wesentlichen die erste Welle 20 umgibt und in einen zweiten Getrieberaumbereich 24, der im Wesentlichen eine dritte, quer zur Längsrichtung angeordnete Welle 26 umgibt. Die Getrieberaumbereiche 22, 24 sind in Längsrichtung aneinandergrenzend ausgebildet und weisen einen gemeinsamen zylindrischen Übergangsbereich 28 auf, der in etwa mittig zur Längsausdehnung des Getriebegehäuses 16 und koaxial zur Rotationsachse 18 angeordnet ist und durch welchen eine axiale Verbindung der Getrieberaumbereiche 22, 24 definiert wird.

Das Getriebegehäuse 16 weist im ersten Getrieberaumbereich 22 eine erste zylindrische Öffnung 30 auf, die koaxial zur Rotationsachse 18 ausgerichtet ist und den ersten Getrieberaumbereich 22 axial nach außen öffnet. Ferner weist das Getriebegehäuse 16 im zweiten Getrieberaumbereich 24 eine zweite, dritte und vierte zylindrische Öffnung 32, 34, 36 auf. Die zweite Öffnung 32 ist koaxial zur Rotationsachse 18 ausgerichtet und öffnet den zweiten Getrieberaumbereich 24 axial nach außen. Die dritte und vierte Öffnung 34, 36 sind beidseitig der Rotationsachse 18 und koaxial zu einer quer zur Rotationsachse 18 angeordneten Rotationsachse 38 der dritten Welle 26 angeordnet.

In dem gemeinsamen Übergangsbereich 28 ist ein erstes Lager 40 und in der ersten Öffnung 30 im ersten Getrieberaumbereich 22 ein zweites Lager 42 für die erste Welle 20 angeordnet. An dem gemeinsamen Übergangsbereich 28 ist ein Absatz 44 eingeformt, der das Lager 40 in Richtung der ersten Öffnung 30 axial fixiert. An der ersten Öffnung 30 ist ein Absatz 46 eingeformt, der das Lager 42 in Richtung des gemeinsamen Übergangsbereichs 28 axial fixiert. Die Lager 40, 42 sind vorzugsweise als Wälzlager ausgebildet und in Figur 1 beispielhaft als Kugellager dargestellt. Durch die Lager 40, 42 wird die erste Welle 20 aufgenommen und drehbar im Getriebegehäuse 16 bzw. im ersten Getrieberaumbereich 22 gelagert.

Im zweiten Getrieberaumbereich 24 ist an der zweiten Öffnung 32 ein Gehäusedeckel 47 vorgesehen, der den zweiten Getrieberaum 24 zur Umgebung hin axial begrenzt.

Im zweiten Getrieberaumbereich 24 ist in der dritten Öffnung 34 ein erstes Lager 48 und in der vierten Öffnung 36 ein zweites Lager 50 für die dritte Welle 26 angeordnet. An der vierten Öffnung 36 ist ein Absatz 52 eingeformt, der das Lager 50 in Richtung der dritten Öffnung 34 axial fixiert. Ferner ist an der vierten Öffnung 36 eine mit einem Sprengring 54 versehene Ringnut 56 eingeformt, wodurch das Lager 50 auch in die entgegengesetzte Richtung axial fixiert wird. Das Lager 48 ist frei gelagert in der dritten Öffnung 34 angeordnet. Die Lager 48, 50 sind vorzugsweise als Wälzlager ausgebildet, wobei für das Lager 48 ein Rollenlager in Form eines Nadellagers verwendet wird, wie in Figur 1 zu sehen ist. Das Lager 50 ist in der dargestellten Form als Kugellager ausgebildet, wobei hier auch ein Rollenlager einsetzbar ist. Durch die Lager 48, 50 wird die dritte Welle 26 aufgenommen und drehbar im Getriebegehäuse 16 bzw. im zweiten Getrieberaumbereich 24 gelagert.

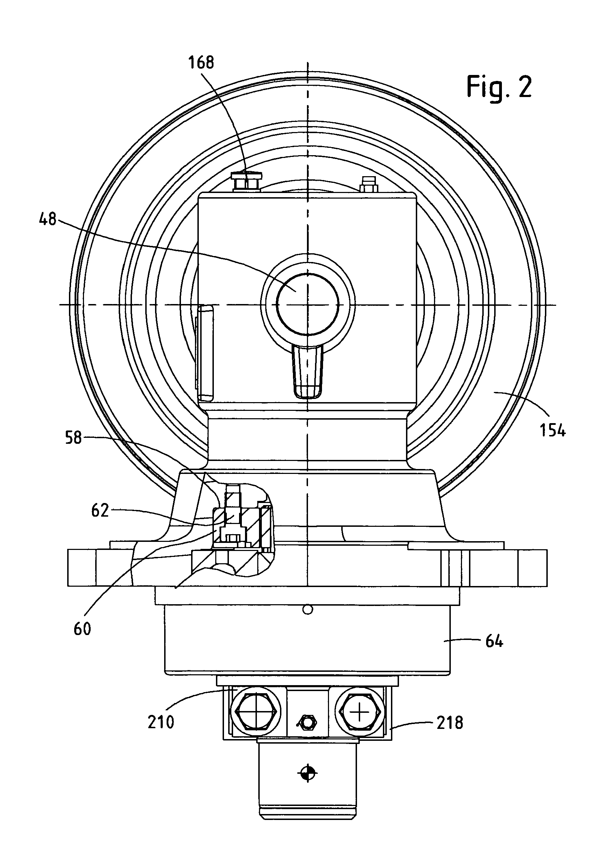

Des Weiteren ist im ersten Getrieberaumbereich 22 zwischen den Lagern 40, 42 ein weiterer Absatz 58 vorgesehen, an dem ein Hohlrad 60 befestigt ist. Das Hohlrad 60 wird mittels auf dem Umfang des Absatzes 58 verteilte Schrauben 62 (siehe Figur 2) mit dem Getriebegehäuse 16 verschraubt.

Die erste Welle 20 erstreckt sich durch den gesamten ersten Getrieberaumbereich 22 und weist einen aus der ersten Öffnung 30 herausragenden Wellenendbereich 64 auf, der im Wesentlichen den gesamten Durchmesser der ersten Öffnung 30 abdeckt. Ausgehend von dem Wellenendbereich 64 ist ein erster Wellenabsatz 66 ausgebildet, dem sich ein Lagerbereich 68 für das zweite Lager 42 anschließt. An den Lagerbereich 68 angrenzend ist ein zweiter Wellenabsatz 70 ausgebildet, dem sich ein mittlerer Wellenbereich 72 anschließt. Der mittlere Wellenbereich 72 mündet in einen dritten Wellenabsatz 74. Dem dritten Wellenabsatz 74 folgt ein vierter Wellenabsatz 76, an den sich ein Wellenzapfen 78 anschließt, wobei sich der Wellenzapfen 78 durch den gemeinsamen Übergangsbereich 28 in den zweiten Getrieberaumbereich 24 erstreckt. Auf dem Wellenzapfen 78 ist ein erstes Kegelrad 80 gelagert, welches über eine Feder-Nut-Verbindung 82 drehfest mit der ersten Welle 20 bzw. mit dem Wellenzapfen 78 verbunden ist. Der Wellenzapfen 78 ist mit einer Wellenmutter 84 versehen. Auf dem ersten Kegelrad 80 ist ein Lagerbereich 86 ausgebildet, durch den die erste Welle 20 im ersten Lager 40 aufgenommen wird.

Die erste Welle 20 ist mit einem Hohlraum 88 versehen. Der Hohlraum 88 ist im Wesentlichen zylindrisch um eine Rotationsachse 90 ausgebildet, wobei die Rotationsachse 90 parallel zur Rotationsachse 18 und exzentrisch zur ersten Welle 20 angeordnet ist. Der Hohlraum 88 weist eine zylindrische Öffnung 92 auf, die den Hohlraum 88 zum Wellenende 64 der ersten Welle 20 hin axial zur Rotationsachse 90 öffnet. Ausgehend von der Öffnung 92 weist der Hohlraum 88 einen ersten und einen zweiten Absatz 94, 96 auf und mündet in einen Hohlraumboden 98. Zwischen dem ersten und dem zweiten Absatz 94, 96 ist der Hohlraum 88 auf Höhe des Hohlrades 60 mit einer Öffnung 100 versehen, die sich radial und axial zur Rotationsachse 90 entlang der Hohlraumwand erstreckt und einen Teilbereich der Hohlraumwand zum Hohlrad 60 hin öffnet.

Zwischen dem zweiten Absatz 96 des Hohlraums 88 und dem Hohlraumboden 98 ist ein erster Lagersitz 102 zur Aufnahme eines ersten Lagers 104 für eine zweite Welle 106 ausgebildet. Zwischen der Öffnung 92 des Hohlraums 88 und dem ersten Absatz 94 ist ein zweiter Lagersitz 108 zur Aufnahme eines zweiten Lagers 110 für die zweite Welle 106 ausgebildet, wobei der zweite Lagersitz 108 eine Ringnut 111 aufweist, in der ein Sprengring 112 zur axialen Fixierung des zweiten Lagers 110 aufgenommen ist.

Das erste und zweite Lager 104, 110 für die zweite Welle 106 sind als Wälzlager ausgebildet, wobei für das erste Lager 104 ein Rollenlager in Form eines Nadellagers und für das zweite Lager 110 ein Kugellager vorgesehen ist, wie in Figur 1 dargestellt ist.

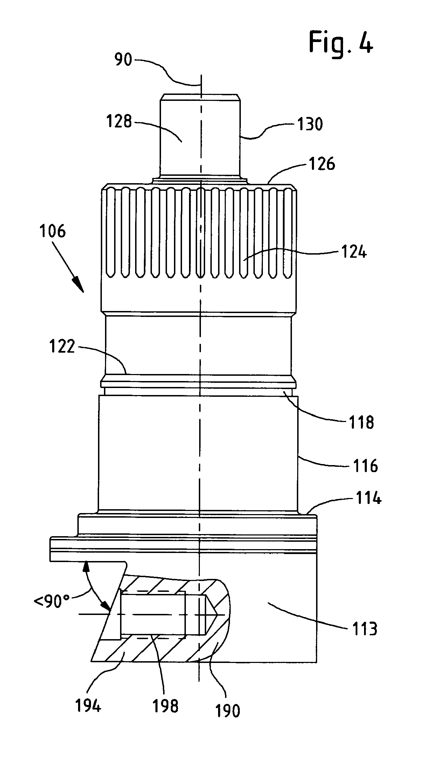

Die zweite Welle 106 erstreckt sich durch den gesamten Hohlraum 88 der ersten Welle 20 und weist einen aus der ersten Öffnung 92 der ersten Welle 20 herausragenden Wellenendbereich 113 auf (siehe Figur 4). Ausgehend von dem Wellenendbereich 113 ist die zweite Welle 106 mit einem ersten Wellenabsatz 114 versehen, dem sich ein Lagerbereich 116 für das zweite Lager 110 anschließt. An den Lagerbereich 116 angrenzend ist eine Ringnut 118 ausgebildet, die einen Sprengring 120 (in Figur 1 dargestellt) aufnimmt. Der Ringnut 118 schließt sich ein zweiter Wellenabsatz 122 an, der in einen Verzahnungsbereich 124 der zweiten Welle 106 mündet. Der Verzahnungsbereich 124 der zweiten Welle 106 erstreckt sich axial zwischen den Absätzen 94, 96 des Hohlraums 88 und endet in einem dritten Wellenabsatz 126. Dem dritten Wellenabsatz 126 schließt sich ein Wellenzapfen 128 an, auf dem ein Lagerbereich 130 für das erste Lager 104 ausgebildet ist.

Die dritte Welle 26 erstreckt sich durch den gesamten zweiten Getrieberaumbereich 24 und weist einen aus der vierten Öffnung 36 herausragenden Wellenendbereich 132 auf (siehe Figur 1). Der Wellenendbereich 132 ist mit einer Wellenmutter 134 versehen. Ausgehend vom Wellenendbereich 132 weist die dritte Welle 26 einen Wellenbereich 136 auf, dem sich eine Ringnut 138 anschließt, wobei ein Teil des Wellenbereichs 136 aus der vierten Öffnung 36 herausragt. In der Ringnut 138 ist ein Sprengring 140 aufgenommen. Zwischen der Ringnut 138 und der dritten Öffnung 34 ist ein Absatz 142 vorgesehen, dem sich ein Wellenzapfen 144 anschließt. Auf dem Wellenzapfen 144 ist ein Lagerbereich 146 ausgebildet, der von dem ersten Lager 48 des zweiten Getrieberaumbereichs 24 aufgenommen wird. Auf dem Wellenbereich 136 ist ein zweites Kegelrad 148 gelagert, welches über eine Feder-Nut-Verbindung 150 drehfest mit der dritten Welle 26 verbunden ist. Auf dem zweiten Kegelrad 148 ist ein Lagerbereich 152 ausgebildet, durch den die dritte Welle im zweiten Lager 50 aufgenommen wird. Ferner ist auf dem aus der vierten Öffnung 36 herausragenden Teil des Wellenbereichs 136 eine Riemenscheibe 154 vorgesehen, die ebenfalls über die Feder-Nut-Verbindung 150 mit der dritten Welle 26 drehfest verbunden ist.

Der Wellenzapfen 78 der ersten Welle 20 ist mit einem Kanal 156 versehen, der ausgehend vom Ende des Wellenzapfens 78 eine Getrieberaumöffnung 158 und eine Hohlraumöffnung 160 aufweist. Die Getrieberaumöffnung 158 ist konzentrisch zur Rotationsachse 18 der ersten Welle 20 angeordnet. Die Hohlraumöffnung 160 des Kanals 156 ist exzentrisch zur Rotationsachse 18 der ersten Welle 20 im Bereich des Hohlraumbodens 98 angeordnet. Die Getrieberaumöffnung 158 ist mit einem Gewinde 161 und einem Bauteil 162, insbesondere ein Verschlussstopfen, versehen, der als Innensechskantschraube ausgebildet ist. Der Bauteil 162 ist mit einer Bohrung 164 versehen. Der Bauteil 162 und die Bohrung 164 sind konzentrisch zur Rotationsachse 18 angeordnet.

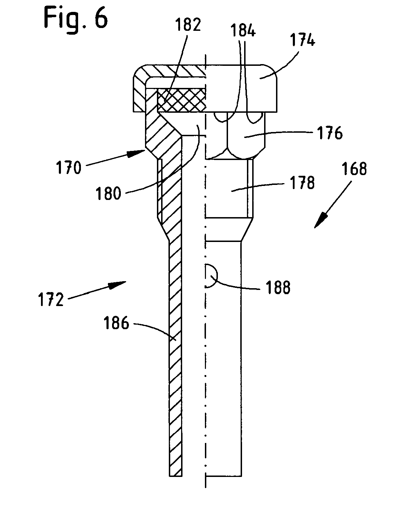

Der Gehäusedeckel 47 weist eine Bohrung 166 auf, in der eine Entlüftungseinrichtung 168 eingesetzt ist. Die Entlüftungseinrichtung 168 ist in Form einer Rohrkonstruktion ausgebildet und detailliert in Figur 6 dargestellt. Die Entlüftungseinrichtung 168 weist einen Kopf 170 auf, dem sich ein Rohrabschnitt 172 anschließt. Der Kopf 170 umfasst eine zylindrische Kappe 174, einen schraubenkopfförmigen Bereich 176 in Form eines Sechskants und einen daran anschließenden zylindrischen Gewindebereich 178. Der schraubenkopfförmige Bereich 176 sowie der Gewindebereich 178 weisen einen zylindrischen Hohlraum 180 auf. Im oberen Bereich des Hohlraums 180 ist ein Filterelement 182 in Form eines Drahtgeflechtes eingebettet. Die Kappe 174 umschließt den schraubenkopfförmigen Bereich 176 im Bereich der Kanten des Sechskants formschlüssig, so dass der Hohlraum 180 nach oben hin verschlossen ist und sich seitlich des Kopfes 170 zwischen dem zylindrischen Rand der Kappe 174 und den Flächen des Sechskants Schlitze 184 bilden, die mit dem Hohlraum 180 verbunden sind. Der Rohrabschnitt 172 umfasst ein zylindrisches Rohr 186, welches in etwa den gleichen Durchmesser des Gewindebereichs 178 aufweist. Das Rohr 186 ist so bemessen, dass es eine Länge aufweist, die einem Vielfachen des Durchmessers entspricht. Die Wandung des Rohrs 186 ist im oberen Bereich, vorzugsweise im oberen Drittel, mit einer Durchgangsbohrung 188 versehen. Das Rohr 186 ist nach unten hin geöffnet und erstreckt sich in das Innere des zweiten Getrieberaumbereichs 24 hinein (siehe Figur 1).

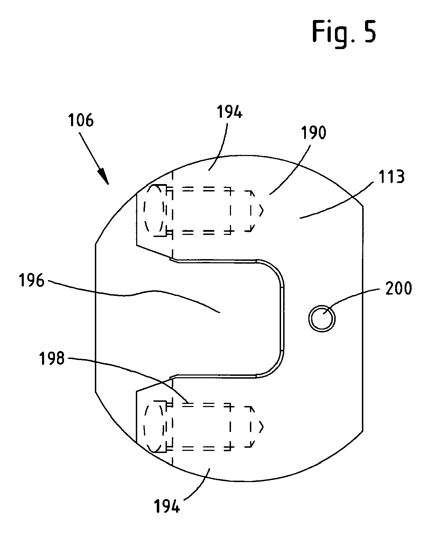

Der Wellenendbereich 113 der zweiten Welle 106 weist Verbindungsmittel 190 auf (Fig. 4), die in Form einer radial verbindenden Flanschanordnung ausgebildet sind, wie in den Figuren 4 und 5 dargestellt ist. Die Verbindungsmittel 190 umfassen eine sich axial aus dem Wellenendbereich 113 der zweiten Welle 106 herausragende, u-förmige Erhebung, welche zwei sich quer zur Rotationsachse 90 auf der Stirnfläche des Wellenendbereichs 113 erstreckende Schenkel 194 aufweist. Zwischen den Schenkeln 194 ist ein Freiraum 196 ausgebildet. An den Stirnflächen der Schenkel 194 sind Gewindebohrungen 198 vorgesehen, wobei die Stirnflächen der Schenkel 194 mit dem Boden des Freiraums 196 einen Winkel einschließen, der kleiner als 90° ist. Die Stirnfläche des Wellenendbereichs 113 ist mit einer Gewindebohrung 200 versehen.

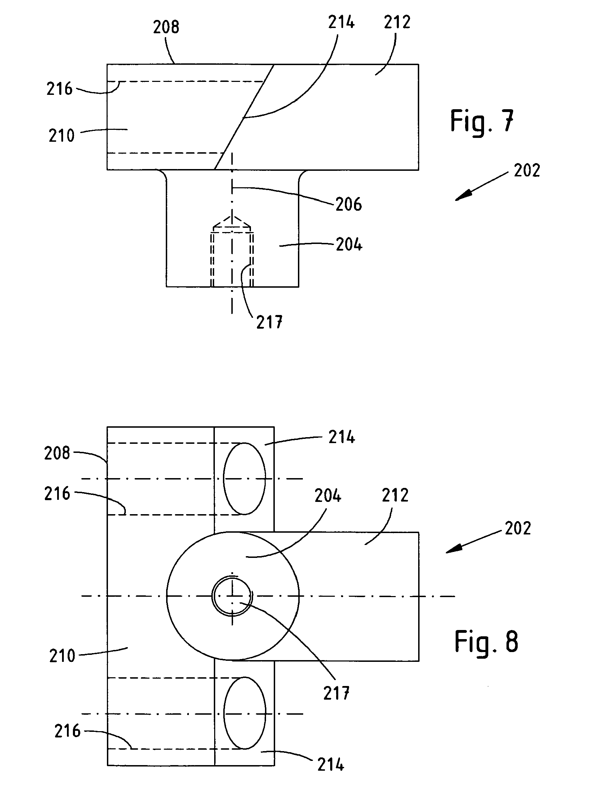

Die Getriebeanordnung 10 ist des Weiteren mit einer Zapfenanordnung 202 versehen, die mit dem Wellenendbereich 113 der zweiten Welle 106 verbunden ist. Die Zapfenanordnung 202 ist detailliert in den Figuren 7 und 8 dargestellt. Die Zapfenanordnung 202 weist einen Zapfen 204 mit einer Zapfenachse 206 und Verbindungsmittel 208 in Form einer radial verbindenden Flanschanordnung auf. Die Verbindungsmittel 208 umfassen eine Platte 210, aus der sich in radialer Richtung zur Zapfenachse 206 ein Steg 212 erstreckt. Die Platte 210 weist eine Höhe auf, die im Wesentlichen der Höhe der u-förmigen Erhebung 192 entspricht. Der Zapfen 204 erstreckt sich axial zur Zapfenachse 206 aus der Platte 210. Der Steg 212 ist derart ausgebildet, dass er im Wesentlichen die Form und die Größe des Freiraums 196 (Fig. 5) aufweist. Seitlich des Stegs 212 sind Verbindungsflächen 214 ausgebildet, die entsprechend der Stirnflächen der Schenkel 194 angeschrägt sind. Die Platte 210 ist mit Bohrungen 216 versehen, die in Größe und Abstand den Gewindebohrungen 198 (Fig. 5) angepasst sind. Der Zapfen 204 ist des Weiteren an seiner Stirnfläche mit einer konzentrisch zur Zapfenachse 206 angeordneten Gewindebohrung 217 versehen.

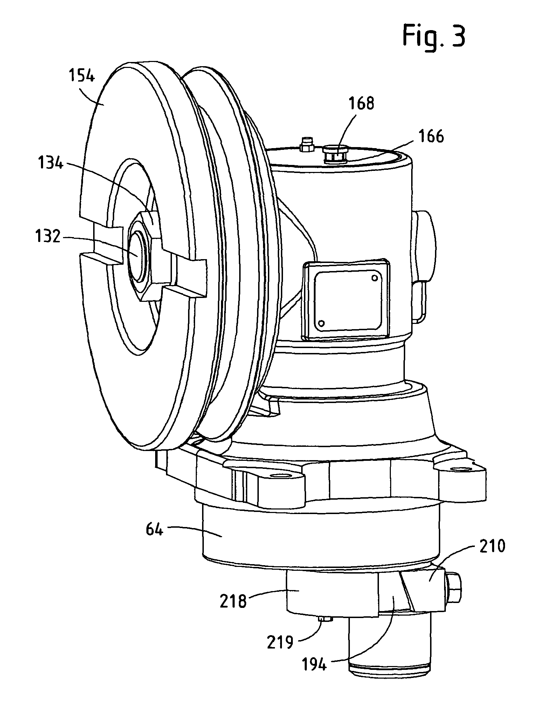

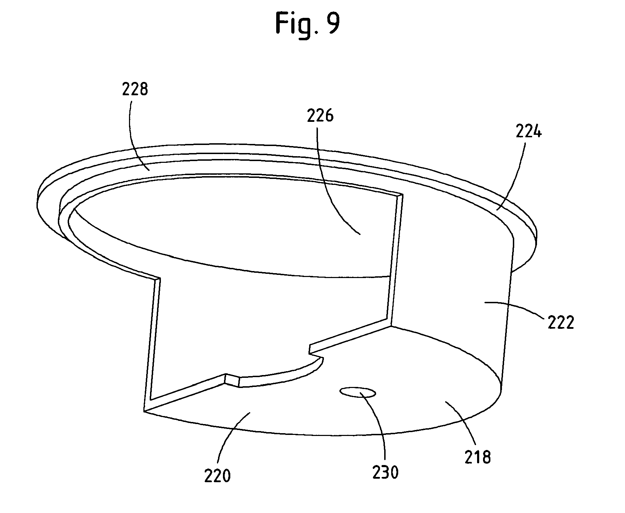

Der Wellenendbereich 113 ist des Weiteren mit einer Kappe 218 versehen (siehe Figur 9). Die Kappe 218 weist die Form eines zylindrischen Topfes auf, mit einem Boden 220, einem Wandbereich 222 und einem Kranz 224, der radial über den Wandbereich 222 der Kappe 218 herausragt. Die Kappe 218 ist unterhalb des Kranzes 224 mit einem Ausschnitt 226 versehen, der den Wandbereich 222 über den halben Umfang des Topfes und den Boden 220 halbkreisförmig freilegt, so dass die Kappe 218 im Wandbereich 222 über den halben Umfang nur noch durch einen verbleibenden schmalen Ring 228 und durch den Kranz 224 ausgebildet ist. In den Boden 220 ist eine Befestigungsbohrung 230 für die Kappe 218 vorgesehen, über die die Kappe 218 mit einer Schraube 219 (siehe Figur 3) in der Gewindebohrung 200 des Wellenendbereichs 113 der zweiten Welle 106 befestigt wird.

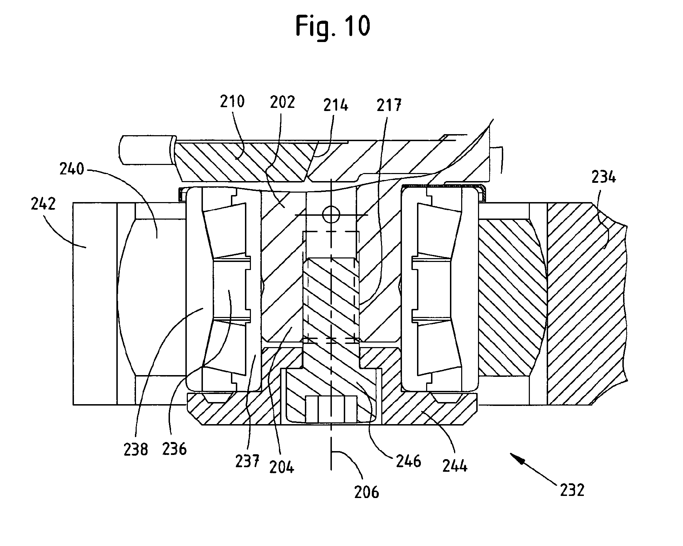

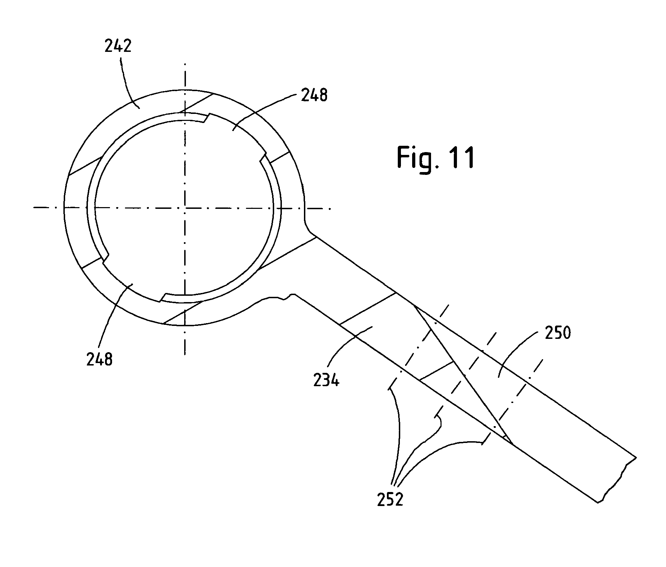

Die Zapfenanordnung 202 bzw. der Zapfen 204 ist mit einer Lageranordnung 232 versehen (siehe Figuren 10 und 11), die mit Verbindungsmitteln 234 zum Betreiben eines Schneidwerks (nicht gezeigt) verbunden ist. Die Lageranordnung 232 umfasst ein Wälzlager 236 mit einem inneren Laufring 237, einem äußeren Laufring 238 und einer über ihren Umfang geschlossene Buchse 240, eine über ihren Umfang geschlossene Lagerpfanne 242, wobei die Lagerpfanne 242 die Verbindung zu den Verbindungsmitteln 234 herstellt, eine Befestigungsscheibe 244 und eine Befestigungsschraube 246. Das Wälzlager 236 ist als Rollenlager ausgebildet und wird von dem Zapfen 204 mit seinem inneren Laufring 237 aufgenommen. Von dem äußeren Laufring 238 wird die Buchse 240 aufgenommen. Die Buchse 240 ist in einer Lagerpfanne 242 gelagert. Die Buchse 240 weist eine Außenfläche auf, die radial zur Rotationsachse 206 des Zapfens 204 sphärisch nach außen gekrümmt ausgebildet ist. Die Lagerpfanne 242 weist eine Innenfläche auf die kongruent zur Außenfläche der Buchse 240 radial zur Rotationsachse 206 des Zapfens 204 sphärisch nach innen gekrümmt ausgebildet ist. Die Lagerpfanne 242 weist radial gegenüberliegende Aussparungen 248 auf, die sich axial zur Zapfenachse 206 entlang der Innenfläche der Lagerpfanne 242 erstrecken. Die Krümmungen der sphärischen Flächen der Buchse 240 bzw. der Lagerpfanne 242 weisen dabei einen Krümmungsradius auf, der dem maximalen Außenradius der Buchse 240 bzw. dem maximalen Innenradius der Lagerpfanne 242 entspricht. Die Aussparungen 248 dienen zum Einführen der Buchse 240 in die Lagerpfanne 242. Das Verbindungsmittel 234 ist in Form einer Führungsstange ausgebildet, die fest mit der Lagerpfanne 242 verbunden bzw. einteilig mit der Lagerpfanne 242 ausgebildet ist. Das Verbindungsmittel 234 wird mittels einer Verbindungsstange 250 und Verschraubungen 252 mit einer Schneidwerksmechanik (nicht gezeigt) verbunden.

Im Folgenden wird kurz auf den Zusammenbau sowie auf die relevanten Vorteile der dargestellten Getriebeanordnung 10 eingegangen.

Ausgehend von dem Getriebegehäuse 16 wird dieses mit dem Hohlrad 60 bestückt und mit dem zweiten Lager 42 für die erste Welle 20 versehen. Es folgt das Einsetzen der ersten Welle 20 in den ersten Getrieberaumbereich 22 durch die erste Öffnung 30. Über die zweite Öffnung 32 des zweiten Getrieberaumbereichs 24 wird das mit dem zweiten Lager 40 vormontierte erste Kegelrad 80 über den Wellenzapfen 78 geführt. Durch die Wellenmutter 84 und den Wellenabsatz 76 werden das Kegelrad 80 und das Lager 40 axial verspannt und die erste Welle 20 axial gesichert.

Die zweite Welle 106 wird mit dem ersten Lager 104 und mit dem zweiten Lager 110 vormontiert, wobei das zweite Lager 110 mit dem Sprengring 120 in der Ringnut 118 axial gesichert wird. Die vormontierte zweite Welle 106 wird in den Hohlraum 88 der ersten Welle 20 geführt und über den Sprengring 112 und der Ringnut 111 axial fixiert.

Die dritte Welle 26 wird dahingehend vormontiert, dass der Wellenzapfen 144 mit dem ersten Lager 48 bestückt wird und das zweite Kegelrad 148 mit dem vormontierten zweiten Lager 50 gegen den auf der dritten Welle 26 in der Ringnut 138 befestigten Sprengring 140 geschoben wird. Anschließend wird die vormontierte dritte Welle 26 über die vierte Öffnung 36 in den zweiten Getrieberaumbereich 24 geführt und das zweite Lager 50 mit dem Sprengring 54 an der Ringnut 56 axial fixiert. Anschließend wird die Riemenscheibe 154 über das Wellenende 132 geführt und gegen das zweite Lager 50 gedrückt. Durch die Wellenmutter 134 und den Sprengring 140 werden die Riemenscheibe 154, das zweite Lager 50 und das zweite Kegelrad 148 axial auf der dritten Welle 26 miteinander verspannt.

Zum Schutz der zylindrischen Öffnung 92 des Hohlraums 88 wird die Kappe 218 an den herausragenden Wellenendbereich 113 der zweiten Welle 106 geschraubt. Der an der Kappe 218 ausgebildete Kranz 224 deckt dabei vollständig die zylindrische Öffnung 92 ab und verhindert das Eindringen von Verunreinigungen.

Das Verbinden der Verbindungsmittel 190, 208 des Wellenendbereichs 113 und der Zapfenanordnung 202 erfolgt durch Einschieben des Steges 212 in den Freiraum 196 und durch Verschrauben der Platte 210 mit den Schenkeln 194 über die Bohrungen 198 und 216. Durch Verbinden der Verbindungsmittel 190, 208 wird der Zapfen 204 exzentrisch zur Rotationsachse 90 der zweiten Welle 106 fixiert.

Der Zusammenbau der Lageranordnung 232 und des Zapfens 202 erfolgt durch Einführen des Zapfens 202 in den inneren Laufring 237 des Wälzlagers 236. Die Buchse 240 wird quer zur Lagerpfanne 242 in die Aussparungen 244 eingeführt (so dass die Radien der Buchse 240 und der Lagerpfanne 242 senkrecht zueinander stehen), bis der Buchsenmittelpunkt in etwa auf Höhe des Lagerpfannenmittelpunktes liegt. Durch anschließendes Ausrichten der Buchse 240 zur Lagerpfanne 244 (so dass die Radien der Buchse 240 und der Lagerpfanne 242 parallel zueinander stehen) wird die Buchse in eine Stellung gebracht, in der sie durch die Lagerpfanne 242 axial und radial zur Rotationsachse des Zapfens 206 fixiert ist. Die Buchse 240 lässt sich jedoch um eine beliebige durch den Lagerpfannenmittelpunkt verlaufende Rotationsachse, die senkrecht zur Rotationsachse 206 gelegen ist, drehen. Im Anschluss daran wird die Buchse 240 über den äußeren Laufring 238 geschoben und das Wälzlager 236 zusammen mit der Buchse 240 mittels der Befestigungsscheibe 244 und der Befestigungsschraube 246 mit dem Zapfen 204 verbunden. Durch die sphärische Ausbildung der Buchse 240 bzw. der Lagerpfanne 242 wird eine Ausgleichsbewegung der Verbindungsmittel 234 bzw. der Verbindungsstange 250 um eine senkrecht zur Rotationsachse 206 des Zapfens 204 gelegenen Achse ermöglicht. Die geschlossene Ausbildung der Buchse 240 und der Lagerpfanne 242 erhöhen die Stabilität und Verschleißfestigkeit der Lageranordnung 232 und vereinfachen den Zusammenbau, da auf herkömmliche Spannvorrichtungen für die Lagerpfanne 242 verzichtet werden kann.

Der Antrieb der Getriebeanordnung 10 erfolgt über die Riemenscheibe 154 an der dritten Welle 26. Über das durch die beiden Kegelräder 80, 148 ausgebildete Winkelgetriebe wird die erste Welle um die Rotationsachse 18 angetrieben. Durch die Rotationsbewegung der ersten Welle 20 wird zum einen eine Rotationsbewegung der zweiten Welle 106 um die Rotationsachse der ersten Welle 20 eingeleitet, zum anderen aber auch eine Eigenrotation der zweiten Welle 106 um die Rotationsachse 90 hervorgerufen, da die zweite Welle 106 über den Verzahnungsbereich 124 durch die Hohlraumöffnung 100 mit dem Hohlrad 60 in Eingriff steht. Der über die Verbindungsmittel 190, 208 mit dem Wellenendbereich 113 der zweiten Welle 106 verbundene Zapfen 204, welcher exzentrisch zur Rotationsachse der zweiten Welle 106 angeordnet ist, erfährt somit eine exzentrische Rotationsbewegung um die Rotationsachse 18 der ersten Welle 20 die von einer exzentrischen Rotationsbewegung um die Rotationsachse 90 der zweiten Welle 106 überlagert ist.

Der zweite Getrieberaumbereich 24 wird wenigsten bis in Höhe der Getrieberaumöffnung 158 des Kanals 156 mit Schmiermittel aufgefüllt. Durch das in die Getrieberaumöffnung 158 eingesetzte Bauteil 162 bzw. durch die in dem Bauteil 162 vorgesehene Bohrung 164 wird der Durchgangsquerschnitt des Kanals 156 deutlich reduziert. Dadurch, dass die Hohlraumöffnung 160 exzentrisch zur Getrieberaumöffnung 158 bzw. zur Rotationsachse 18 angeordnet ist, entsteht bei Rotation der ersten Welle 20 ein Sog, der das vorhandene Schmiermittel von der Getrieberaumöffnung 158 durch den Kanal 156 zur Hohlraumöffnung 160 befördert. Der durch die Bohrung reduzierte Durchlassquerschnitt des Kanals 156 bewirkt, dass eine reduzierte Menge an Schmiermittel in den Hohlraum 88 gelangt. Durch Anpassen der Bohrung 164 kann die Schmierwirkung auf einfache Weise an die Leistungserfordernisse der Getriebeanordnung angepasst werden, so dass das durch den Kanal geförderte Schmiermittel einer optimierten Menge entspricht. Dadurch können ein zu hoher Verbrauch an Schmiermittel verhindert und Wartungsintervalle verlängert werden.

Die in den Gehäusedeckel 47 eingesetzte Entlüftungseinrichtung 168 dient zur Entlüftung der Getriebeanordnung 10. Sie besitzt den Vorteil gegenüber herkömmlichen Einrichtungen, dass der Rohrabschnitt im Verhältnis zum Durchmesser des Kopfes 170 sehr lang ausgebildet ist. Dadurch kann die Verschmutzung des Filterelements verlangsamt werden, da sich zum einen durch das Rohr 186 aufsteigender Schmiermitteldampf an der Rohrinnenwand absetzen kann, zum anderen aufschäumendes bzw. aufspritzendes Schmiermittel nicht so direkt an den Filter gelangt und diesen verschmutzt. Des Weiteren kann das im Rohr 186 aufsteigende Schmiermittel durch die Bohrung 188 austreten. Alles in allem werden dadurch Wartungsintervalle verlängert und die Temperatur- und Druckverhältnisse im Getrieberaum 12 deutlich verbessert.

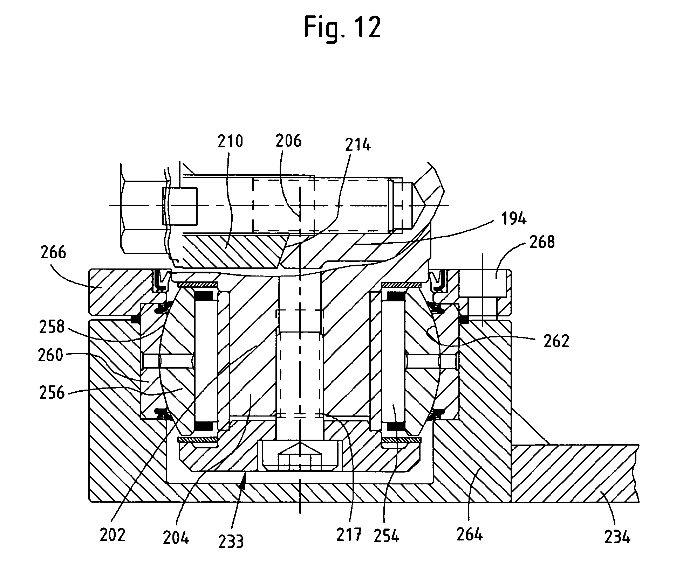

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise eine Lageranordnung 233 in einem alternativen Ausführungsbeispiel mit einem Nadellager 254 ausgerüstet sein, wie in Figur 12 dargestellt ist. Bei diesem alternativen Ausführungsbeispiel ist ein Nadellager 254 vorgesehen, welches einen äußeren Laufring 256 aufweist, der ähnlich der Buchse 240 des vorangegangenen Ausführungsbeispiels eine nach außen hin sphärisch gewölbte Außenfläche 258 aufweist. Der äußere Laufring 256 wird dabei von einem Außenring 260 aufgenommen, wobei der Außenring 260 eine Innenfläche 262 aufweist, die kongruent zur Außenfläche 258 des äußeren Laufrings 256 ausgebildet ist. Über eine Lagerpfanne 264, welche mit einem Spanndeckel 266 und mit Spannschrauben 268 versehen ist, wird die Lageranordnung 233 eingespannt. Ein entsprechendes Verbindungsmittel 234 ist fest mit der Lagerpfanne 264 verbunden. Die Verwendung eines derartigen Nadellagers bietet den Vorteil, dass derartige Nadellager mit sphärisch ausgebildeten äußeren Laufringen 256 und Außenringen 260 bereits vormontiert im Handel erhältlich sind.

## Patentansprüche

1. Getriebeanordnung, mit einem Getriebegehäuse (16), einem von dem Getriebegehäuse (16) umschlossenen Getrieberaum (12), einer in dem Getriebegehäuse (16) gelagerten ersten Welle (20), einem in der ersten Welle (20) mit seinem Querschnittsschwerpunkt exzentrisch zur Rotationsachse (18) ausgebildeten Hohlraum (88), einem in der ersten Welle (20) ausgebildeten Kanal (156), der den Getrieberaum (12) mit dem Hohlraum (88) der ersten Welle (20) verbindet, wobei der Kanal (156) mit einem einen Durchlassquerschnitt des Kanals (156) reduzierenden Bauteil (162) versehen ist, und einer in dem Hohlraum (88) der ersten Welle (20) drehbar gelagerten zweiten Welle (106), wobei die zweite Welle (106) einteilig ausgebildet ist und wenigstens einen ersten und einen zweiten Lagerbereich (116, 130), einen Verzahnungsbereich (124), der mit einer mit dem Getriebegehäuse (16) drehfest verbundenen Verzahnung (60) in Eingriff steht, und einen axial aus dem Hohlraum (88) der ersten Welle (20) herausragenden Wellenendbereich (113) aufweist, wobei einer der Lagerbereiche (116, 130) zwischen dem Verzahnungsbereich (124) und dem Wellenendbereich (113) angeordnet ist und die maximalen Außendurchmesser der zweiten Welle (106) in den einzelnen Bereichen (113, 116, 124, 130) zum Wellenendbereich (113) hin gleichbleibend oder ansteigend ausgebildet sind.

2. Getriebeanordnung nach Anspruch 1, **dadurch gekennzeichnet, dass** der Wellenendbereich (113) der zweiten Welle (106) Verbindungsmittel (190) aufweist.

3. Getriebeanordnung nach einem oder mehreren der vorhergehenden Ansprüche, **gekennzeichnet durch** eine Kappe (218), mit welcher ein zwischen dem Wellenendbereich (113) und der ersten Welle (20) ausgebildeter Spalt wenigstens teilweise abdeckbar ist.

4. Getriebeanordnung nach einem oder mehreren der vorhergehenden Ansprüche, **dadurch gekennzeichnet, dass** ein Zapfen (204) vorgesehen ist, der sich axial und exzentrisch zur Rotationsachse (90) der zweiten Welle (106) aus dem Wellenendbereich (113) erstreckt, wobei der Zapfen (204) Verbindungsmittel (208) aufweist, die mit den Verbindungsmitteln (190) des Wellenendbereichs (113) verbindbar sind und wobei der Zapfen (204) mit einem Wälzlager (236) versehen ist.

5. Getriebeanordnung nach Anspruch 4, **dadurch gekennzeichnet, dass** das Wälzlager (236) als Rollenlager ausgebildet ist, ein äußerer Laufring (238) des Wälzlagers (236) von einer Buchse (240) mit einer sphärisch gewölbt ausgebildeten Außenfläche und die sphärisch gewölbt ausgebildete Außenfläche der Buchse (240) von einer Lagerpfanne (242) aufgenommen wird, welche mit einer kongruent zur Außenfläche der Buchse (240) ausgebildeten Innenfläche ausgebildet ist, wobei die Buchse (240) und die Lagerpfanne (242) über den Umfang geschlossen ausgebildet sind und die Lagerpfanne (242) mit radial gegenüberliegenden und sich axial entlang der Innenfläche der Lagerpfanne (242) erstreckenden Aussparungen (248) versehen ist.

6. Getriebeanordnung nach Anspruch 4, **dadurch gekennzeichnet, dass** das Wälzlager (236) als Nadellager (254) ausgebildet ist, welches einen äußeren Laufring (256) mit einer sphärisch gewölbt ausgebildeten Außenfläche (258) umfasst, wobei das Nadellager (254) einen Außenring (260) aufweist, welcher mit einer kongruent zur Außenfläche (258) des äußeren Laufrings (256) ausgebildeten Innenfläche versehen ist, wobei der Laufring (256) von dem Außenring (260) aufgenommen wird und der Außenring (260) des Nadellagers (254) in einer Lagerpfanne (264) gelagert ist.

7. Getriebeanordnung nach Anspruch 5 oder 6, **dadurch gekennzeichnet, dass** die Lagerpfanne (242, 264) für das Wälzlager (236) des Zapfens (204) mit Verbindungsmittel (250), insbesondere Verbindungsmittel (250) zur Verbindung mit einem Schneidwerk, verbunden ist.

8. Getriebeanordnung nach einem oder mehreren der vorhergehenden Ansprüche, **dadurch gekennzeichnet, dass** der Kanal (156) eine konzentrisch zur Rotationsachse (18) der ersten Welle (20) angeordnete Getrieberaumöffnung (158) und eine exzentrisch zur Rotationsachse (18) der ersten Welle angeordnete Hohlraumöffnung (160) aufweist, der Bauteil (162) an der Getrieberaumöffnung (158) angeordnet, die Getrieberaumöffnung (158) mit einem Gewinde (161) versehen und der Bauteil (162) ein mit einem Gewinde und einer Bohrung (164) versehener Verschlussstopfen, insbesondere Schraube ist.

9. Getriebeanordnung nach einem oder mehreren der vorhergehenden Ansprüche, **gekennzeichnet durch** eine im Getriebegehäuse (16) gelagerte dritte Welle (26), deren Rotationsachse (38) mit einer auf der Rotationsachse (18) der ersten Welle (20) liegenden Ebene einen Winkel einschließt.

10. Getriebeanordnung nach Anspruch 9, **gekennzeichnet durch** ein erstes Lager (48) der dritten Welle (26), mit dem diese axial lose gelagert ist, und ein zweites Lager (50) der dritten Welle (26), wobei das erste Lager (48) der dritten Welle (26) als Rollenlager, insbesondere Nadellager, ausgebildet ist und das zweite Lager (50) axial in Richtung nach außen zum Getriebegehäuse am Getriebegehäuse (16) mit einem Sprengring (54) fixiert ist.

11. Getriebeanordnung nach Anspruch 9 oder 10, **gekennzeichnet durch** ein auf der dritten Welle (26) angeordnetes Zahnrad (148), welches auf der dritten Welle (26) nur in einer Richtung **durch** einen Sprengring (140) axial fixiert ist und mit einem auf der ersten Welle (20) befestigten Zahnrad (80) in Eingriff steht, wobei das Zahnrad (80) der ersten Welle (20) in einem ersten Lager (40) der ersten Welle (20) radial zur Rotationsachse (18) der ersten Welle (20) fixiert ist und eine Axialkraft in Bezug auf die dritte Welle (26) ausübt.

12. Getriebeanordnung nach einem der vorhergehenden Ansprüche, **dadurch gekennzeichnet, dass** an einem Getriebegehäusedeckel (47) eine den Getrieberaum (12) mit der Umgebung des Getriebegehäuses (16) verbindende Entlüftungseinrichtung (168) vorgesehen ist, wobei die Entlüftungseinrichtung (168) als eine sich durch eine Bohrung (166) im Getriebegehäusedeckel (47) erstreckende Rohrkonstruktion ausgebildet ist, welche einen Kopf (170) und einen in den Getrieberaum (12) hineinragenden Rohrabschnitt (172) aufweist, wobei vorzugsweise an dem Kopf (170) ein Filterelement (182) aufnehmbar ist.

13. Getriebeanordnung nach Anspruch 12, **dadurch gekennzeichnet, dass** der Rohrabschnitt (172) eine Länge aufweist, die ein Vielfaches des Durchmessers des Kopfes (170) beträgt, wobei eine Wandung des Rohrabschnitts (172) mit einer Bohrung (188) versehen ist.

## Claims

1. Transmission arrangement, with a transmission housing (16), a transmission space (12) surrounded by the transmission housing (16), a first shaft (20) mounted in the transmission housing (16), a cavity (88) formed with the cross-sectional centre of gravity thereof eccentrically with respect to the axis of rotation (18) in the first shaft (20), a channel (156) which is formed in the first shaft (20) and connects the transmission space (12) to the cavity (88) in the first shaft (20), wherein the channel (156) is provided with a component (162) reducing a passage cross section of the channel (156), and a second shaft (106) mounted rotatably in the cavity (88) in the first shaft (20), wherein the second shaft (106) is of single-part design and has at least one first and one second bearing region (116, 130), a toothing region (124) which is in engagement with a toothing (60) connected in a rotationally fixed manner to the transmission housing (16), and a shaft end region (113) projecting axially out of the cavity (88) in the first shaft (20), wherein one of the bearing regions (116, 130) is arranged between the toothing region (124) and the shaft end region (113), and the maximum outside diameters of the second shaft (106) are designed in the individual regions (113, 116, 124, 130) to remain constant or increase towards the shaft end region (113).

2. Transmission arrangement according to Claim 1, **characterized in that** the shaft end region (113) of the second shaft (106) has connecting means (190).

3. Transmission arrangement according to one or more of the preceding claims, **characterized by** a cap (218) with which a gap formed between the shaft end region (113) and the first shaft (20) can be at least partially covered.

4. Transmission arrangement according to one or more of the preceding claims, **characterized in that** a journal (204) is provided, the journal extending out of the shaft end region (113) axially and eccentrically with respect to the axis of rotation (90) of the second shaft (106), the journal (204) having connecting means (208) which can be connected to the connecting means (190) of the shaft end region (113), and the journal (204) being provided with a rolling contact bearing (236).

5. Transmission arrangement according to Claim 4, **characterized in that** the rolling contact bearing (236) is designed as a roller bearing, an outer raceway (238) of the rolling contact bearing (236) is received by a bushing (240) having an outer surface of spherically curved design, and the outer surface of spherically curved design of the bushing (240) is received by a footstep bearing (242) which is designed with an inner surface formed congruently with respect to the outer surface of the bushing (240), the bushing (240) and the footstep bearing (242) being designed such that they are closed over the circumference, and the footstep bearing (242) being provided with radially opposite cutouts (248) extending axially along the inner surface of the footstep bearing (242).

6. Transmission arrangement according to Claim 4, **characterized in that** the rolling contact bearing (236) is designed as a needle bearing (254) which comprises an outer raceway (256) having an outer surface (258) of spherically curved design, the needle bearing (254) having an outer race (260) which is provided with an inner surface formed congruently with respect to the outer surface (258) of the outer raceway (256), and the raceway (256) being received by the outer race (260), and the outer race (260) of the needle bearing (254) being mounted in a footstep bearing (264).

7. Transmission arrangement according to Claim 5 or 6, **characterized in that** the footstep bearing (242, 264) for the rolling contact bearing (236) of the journal (204) is connected to connecting means (250), in particular connecting means (250) for connection to a cutter.

8. Transmission arrangement according to one or more of the preceding claims, **characterized in that** the channel (156) has a transmission-space opening (158) arranged concentrically with respect to the axis of rotation (18) of the first shaft (20) and a cavity opening (160) arranged eccentrically with respect to the axis of rotation (18) of the first shaft, the component (162) is arranged on the transmission-space opening (158), the transmission-space opening (158) is provided with a thread (161), and the component (162) is a closure stopper provided with a thread and a bore (164), in particular a screw.

9. Transmission arrangement according to one or more of the preceding claims, **characterized by** a third shaft (26) which is mounted in the transmission housing (16) and the axis of rotation (38) of which encloses an angle with a plane lying on the axis of rotation (18) of the first shaft (20).

10. Transmission arrangement according to Claim 9, **characterized by** a first bearing (48) of the third shaft (26), with which said shaft is mounted in an axially loose manner, and a second bearing (50) of the third shaft (26), wherein the first bearing (48) of the third shaft (26) is designed as a roller bearing, in particular a needle bearing, and the second bearing (50) is fixed on the transmission housing (16) axially in the outwards direction with respect to the transmission housing by means of a snap ring (54).

11. Transmission arrangement according to Claim 9 or 10, **characterized by** a gearwheel (148) which is arranged on the third shaft (26) and is axially fixed on the third shaft (26) only in one direction by means of a snap ring (140) and is in engagement with a gearwheel (80) fastened on the first shaft (20), the gearwheel (80) of the first shaft (20) being fixed in a first bearing (40) of the first shaft (20) radially with respect to the axis of rotation (18) of the first shaft (20) and exerting an axial force with respect to the third shaft (26).

12. Transmission arrangement according to one of the preceding claims, **characterized in that** a venting device (168) connecting the transmission space (12) to the surroundings of the transmission housing (16) is provided on a transmission housing cover (47), the venting device (168) being designed as a tube structure which extends through a bore (166) in the transmission housing cover (47) and has a head (170) and a tube portion (172) projecting into the transmission space (12), it being possible for a filter element (182) to be accommodated preferably on the head (170).

13. Transmission arrangement according to Claim 12, **characterized in that** the tube section (172) is of a length which is a multiple of the diameter of the head (170), a wall of the tube section (172) being provided with a bore (188).

## Revendications

1. Agencement de transmission, comprenant un carter de transmission (16), un espace de transmission (12) entouré par le carter de transmission (16), un premier arbre (20) monté dans le carter de transmission (16), une cavité (88) réalisée dans le premier arbre (20) avec son centre de gravité en section transversale situé de manière excentrique par rapport à l'axe de rotation, un canal (156) réalisé dans le premier arbre (20), qui relie l'espace de transmission (12) à la cavité (88) du premier arbre (20), le canal (156) étant pourvu d'un composant (162) réduisant une section transversale de passage du canal (156), et un deuxième arbre (106) monté à rotation dans la cavité (88) du premier arbre (20), le deuxième arbre (106) étant réalisé d'une seule pièce et présentant au moins une première et une deuxième région de palier (116, 130), une région de denture (124), qui est en prise avec une denture (60) connectée de manière solidaire en rotation au carter de transmission (16), et une région de bout d'arbre (113) saillant axialement hors de la cavité (88) du premier arbre (20), l'une des régions de palier (116, 130) étant disposée entre la région de denture (124) et la région de bout d'arbre (113) et les diamètres extérieurs maximaux du deuxième arbre (106) dans les régions individuelles (113, 116, 124, 130) étant réalisés de manière identique ou croissante par rapport à la région de bout d'arbre (113).

2. Agencement de transmission selon la revendication 1, **caractérisé en ce que** la région de bout d'arbre (113) du deuxième arbre (106) présente des moyens de connexion (190).

3. Agencement de transmission selon l'une quelconque ou plusieurs des revendications précédentes, **caractérisé par** un chapeau (218) avec lequel une fente réalisée entre la région de bout d'arbre (113) et le premier arbre (20) peut être recouverte au moins en partie.

4. Agencement de transmission selon l'une quelconque ou plusieurs des revendications précédentes, **caractérisé en ce que** l'on prévoit un tourillon (204), qui s'étend axialement et de manière excentrique par rapport à l'axe de rotation (90) du deuxième arbre (106) depuis la région de bout d'arbre (113), le tourillon (204) présentant des moyens de connexion (208) qui peuvent être connectés aux moyens de connexion (190) de la région de bout d'arbre (113), et le tourillon (204) étant pourvu d'un palier à roulements (236).

5. Agencement de transmission selon la revendication 4, **caractérisé en ce que** le palier à roulement (236) est réalisé sous forme de palier à rouleaux, une bague de roulement extérieure (238) du palier à roulement (236) est reçue par une douille (240) avec une surface extérieure de courbure sphérique et la surface extérieure de courbure sphérique de la douille (240) est reçue par une cavité de palier (242), qui est réalisée avec une surface intérieure réalisée en coïncidence avec la surface extérieure de la douille (240), la douille (240) et la cuvette de palier (242) étant réalisées de manière fermée sur la circonférence et la cuvette de palier (242) étant pourvue d'évidements (248) radialement opposés et s'étendant axialement le long de la surface intérieure de la cuvette de palier (242).

6. Agencement de transmission selon la revendication 4, **caractérisé en ce que** le palier à roulement (236) est réalisé sous forme de palier à aiguilles (254), qui comprend une bague de roulement extérieure (256) avec une surface extérieure (258) de courbure sphérique, le palier à aiguille (254) présentant une bague extérieure (260) qui est pourvue d'une surface intérieure réalisée en coïncidence avec la surface extérieure (258) de la bague de roulement extérieure (256), la bague de roulement (256) étant reçue par la bague extérieure (260) et la bague extérieure (260) du palier à aiguilles (254) étant montée dans une cuvette de palier (264).

7. Agencement de transmission selon la revendication 5 ou 6, **caractérisé en ce que** la cuvette de palier (242, 264) pour le palier à roulement (236) du tourillon (204) est connectée à des moyens de connexion (250), en particulier des moyens de connexion (250) pour la connecter à un outil de coupe.

8. Agencement de transmission selon l'une quelconque ou plusieurs des revendications précédentes, **caractérisé en ce que** le canal (156) présente une ouverture d'espace de carter (158) disposée concentriquement à l'axe de rotation (18) du premier arbre (20) et une ouverture de cavité 9160) disposée de manière excentrique par rapport à l'axe de rotation (18) du premier arbre, le composant (162) est disposé sur l'ouverture de carter de transmission (158), l'ouverture de l'espace de transmission (158) est pourvue d'un filetage (161) et le composant (162) est un bouchon de fermeture pourvu d'un filetage et d'un alésage (164), notamment une vis.

9. Agencement de transmission selon l'une quelconque ou plusieurs des revendications précédentes, **caractérisé par** un troisième arbre (26) monté dans le carter de transmission (16), dont l'axe de rotation (38) forme un angle avec un plan situé sur l'axe de rotation (18) du premier arbre (20).

10. Agencement de transmission selon la revendication 9, **caractérisé par** un premier palier (48) du troisième arbre (26), avec lequel celui-ci est monté de manière libre axialement, et un deuxième palier (50) du troisième arbre (26), le premier palier (48) du troisième arbre (26) étant réalisé sous forme de palier à rouleaux, notamment un palier à aiguilles, et le deuxième palier (50) étant fixé axialement vers l'extérieur par rapport au carter de transmission sur le carter de transmission (16) avec un jonc (54).

11. Agencement de transmission selon la revendication 9 ou 10, **caractérisé par** une roue dentée (148) disposée sur le troisième arbre (26), laquelle est fixée axialement sur le troisième arbre (26) uniquement dans une direction par un jonc (140), et qui est en prise avec une roue dentée (80) fixée sur le premier arbre (20), la roue dentée (80) du premier arbre (20) étant fixée dans un premier palier (40) du premier arbre (20) radialement par rapport à l'axe de rotation (18) du premier arbre (20) et exerçant une force axiale par rapport au troisième arbre (26).

12. Agencement de transmission selon l'une quelconque des revendications précédentes, **caractérisé en ce que** l'on prévoit sur un couvercle de carter de transmission (47) un dispositif de désaérage (168) reliant l'espace de transmission (12) à l'environnement du carter de transmission (16), le dispositif de désaérage (168) étant réalisé sous forme d'une construction tubulaire s'étendant à travers un alésage (166) dans le couvercle de carter de transmission (47), qui présente une tête (170) et une portion tubulaire (172) saillant à l'intérieur de l'espace de transmission (12), un élément de filtre (182) pouvant de préférence être reçu sur la tête (170).

13. Agencement de transmission selon la revendication 12, **caractérisé en ce que** la portion tubulaire (172) présente une longueur qui vaut un multiple du diamètre de la tête (170), une paroi de la portion tubulaire (172) étant pourvue d'un alésage (188).
